(19) Europäisches Patentamt
European Patent Office
Office européen des brevets

(11) **EP 1 947 534 B1**

(12) **FASCICULE DE BREVET EUROPEEN**

(45) Date de publication et mention
de la délivrance du brevet:
**23.06.2010 Bulletin 2010/25**

(51) Int Cl.:
***G05B 13/04*** *(2006.01)*     ***G05D 13/02*** *(2006.01)*

(21) Numéro de dépôt: **08300040.6**

(22) Date de dépôt: **21.01.2008**

(54) **Optimisation de la réponse fréquentielle d'un simulateur de mouvement par suivi adaptatif de consignes sinusoïdales**

Optimierung der Frequenzantwort eines Bewegungssimulators durch adaptative Überwachung der Sinus-Einstellwerte

Optimisation of the frequency response of a movement simulator by adaptive monitoring of sinusoidal instructions

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.01.2007 FR 0752807**

(43) Date de publication de la demande:
**23.07.2008 Bulletin 2008/30**

(73) Titulaire: **iXMotion SAS**
**78160 Marly-le-Roi (FR)**

(72) Inventeur: **Vau, Bernard**
**92500 Rueil Malmaison (FR)**

(74) Mandataire: **Michelet, Alain et al**
**Cabinet Harlé et Phélip**
**7, rue de Madrid**
**75008 Paris (FR)**

(56) Documents cités:
**WO-A-2006/131664**

- **CHAMPENOIS G ET AL: "Implementation of RST controllers for a flexible servo considering practical limitations" INDUSTRIAL AUTOMATION AND CONTROL, 1995 (I A & C'95)., IEEE/IAS INTERNATIONAL CONFERENCE ON (CAT. NO.95TH8005) HYDERABAD, INDIA 5-7 JAN. 1995, NEW YORK, NY, USA,IEEE, US, 5 janvier 1995 (1995-01-05), pages 209-213, XP010146893 ISBN: 0-7803-2081-6**
- **MAAZIZ M K ET AL: "A new RST cascaded predictive control scheme for induction machines" CONTROL APPLICATIONS, 1999. PROCEEDINGS OF THE 1999 IEEE INTERNATIONAL CONFERENCE ON KOHALA COAST, HI, USA 22-27 AUG. 1999, PISCATAWAY, NJ, USA,IEEE, US, vol. 2, 22 août 1999 (1999-08-22), pages 927-932, XP010356313 ISBN: 0-7803-5446-X**

**Description**

L'invention a pour domaine celui des simulateurs de mouvement asservis en position, en vitesse ou en accélération.

Les simulateurs de mouvement sont utilisés, entre autres choses, pour tester les caractéristiques en fonction de la fréquence d'un composant posé sur le plateau d'un simulateur de mouvement apte à générer des mouvements tels que des mouvements de rotation instantanée autour d'un axe. Une catégorie de mouvements particulièrement intéressante pour mener des tests est constituée des mouvements tels que la position, la vitesse ou l'accélération angulaire de l'axe soit une fonction sinusoïdale caractérisée par une amplitude et une pulsation. On applique donc un signal de consigne de la forme $Ae^{j \cdot w \cdot t}$ (en adoptant une notation complexe) et l'on procède aux mesures caractéristiques sur le capteur à tester. Mais ce test n'a de valeur que si le simulateur de mouvement a effectivement un mouvement qui suit le signal de consigne. On cherche donc à ce que le mouvement réel du simulateur de mouvement soit le plus fidèle possible par rapport à la consigne. Incidemment, le mot composant définit ici tout composant inertiel ou tout type de capteur mesurant une position, une vitesse ou une accélération.

Des systèmes d'asservissement pour simulateur de mouvement sont déjà connus par la demande de brevet WO2006/161664A ou l'article « Implementation of RST controllers for a flexible servo considering practical limitations » de CHAMPENOIS G. et AP. dans Industrial Automation and Control, 1995, p. 209-213 ISBN 0-7803-2081-6.

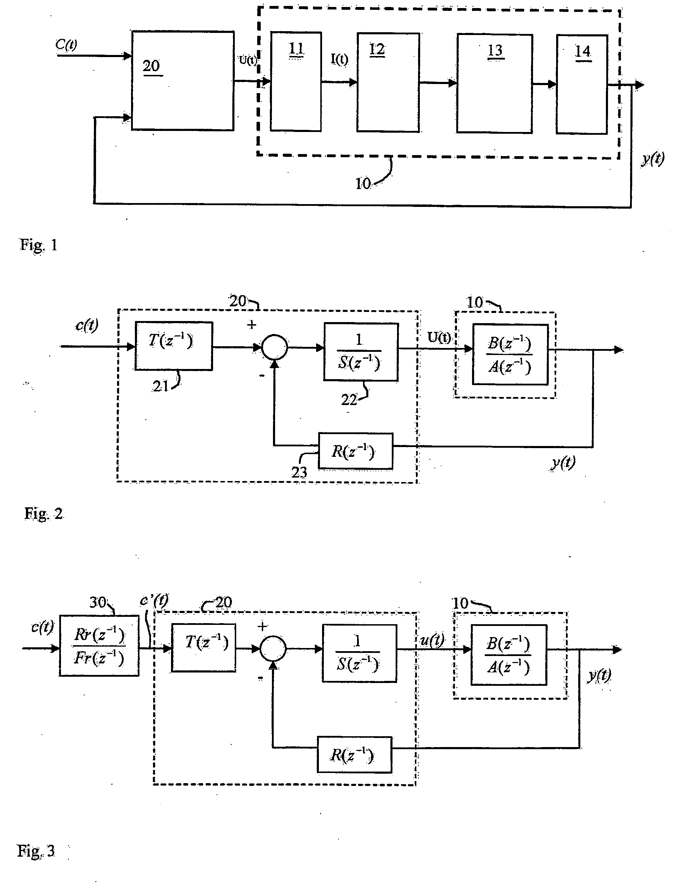

La structure de la boucle d'asservissement en position (en vitesse ou en accélération) d'un simulateur de mouvement est généralement conforme au schéma représenté sur la figure 1. Le système physique à asservir 10 est constitué d'un amplificateur de courant 11, d'un moteur 12 à courant continu ou à courant alternatif (par exemple moteur à courant alternatif sans balai : « AC brushless »), de l'axe 13 de la machine et d'un capteur 14. L'amplificateur de courant 11 reçoit par exemple une commande sous la forme d'une tension u(t) et applique en conséquence l'intensité i(t) correspondante au bornes du moteur électrique 12. L'axe 13 du simulateur de mouvement étant couplé au rotor du moteur électrique 12, la circulation d'un courant i(t) adapté dans le stator met en rotation l'axe 13 autour de son axe de symétrie. Le capteur 14 mesure une grandeur cinématique instantanée y(t) relative au mouvement de l'axe 13 du simulateur de mouvement. Cette grandeur mesurée y(t) peut être soit la position de l'axe soit la vitesse de celui-ci, soit encore l'accélération de celui-ci (grandeur mesurée angulaire ou linéaire).

La boucle d'asservissement consiste en une loi de commande 20 qui, à partir des entrées constituées à la fois du signal de consigne c(t) et de la grandeur mesurée y(t), détermine la valeur de la commande u(t) à appliquer au système asservi 10. Cette loi de commande est établie par un algorithme de synthèse à partir d'une modélisation physique du comportement du système à asservir.

La boucle d'asservissement fermée présentée sur la figure 1 a la particularité d'avoir un comportement « passe-bas » entre la consigne c(t) et la mesure y(t). Ce qui signifie que la qualité du suivi d'une consigne sinusoïdale dépend de la fréquence de cette consigne. Pour les basses fréquences (par exemple de l'ordre du Hertz), il n'y a aucune difficulté particulière pour assurer un suivi de la consigne sans qu'apparaisse une erreur significative, dite de « traînage », entre la consigne c(t) et la grandeur mesurée y(t), par exemple la position. En revanche, plus la fréquence de la consigne sinusoïdale augmente, plus l'erreur de traînage devient importante. Pour ces fréquences élevées, la position de l'axe suit encore un mouvement sinusoïdal mais avec une certaine atténuation de l'amplitude qui est de plus en plus marquée lorsque la fréquence augmente. On définit la fréquence de coupure de l'asservissement comme étant la fréquence pour laquelle l'amplitude de la consigne subit une atténuation de $\pm$ 3 dB.

Il est souhaitable que la fréquence de coupure, qui est un indicateur des performances de l'asservissement, soit la plus haute possible. Néanmoins la valeur maximale de la fréquence de coupure est limitée à cause des dynamiques haute fréquence ne pouvant pas être prises en compte dans la modélisation de la machine asservie, modélisation à la base de la synthèse de l'asservissement. Ces dynamiques hautes fréquences sur la modélisation sont par exemple dues à la dynamique électrique du moteur ou, encore, les résonances de la structure mécanique.

Par ailleurs, afin que la boucle d'asservissement soit stable quel que soit le mouvement que l'on souhaite donner au simulateur de mouvement, il faut concevoir un asservissement dit robuste par rapport à ces dynamiques haute fréquence. Pour mémoire, la propriété de robustesse d'un asservissement garantit la stabilité de la boucle d'asservissement lorsque le système à commander s'écarte du modèle nominal. Or, d'un point de vue théorique, on montre que la robustesse et les performances sont deux notions antagonistes. C'est-à-dire que la robustesse nécessaire dans la boucle d'asservissement entraîne des limitations sur les performances de cet asservissement, et notamment abaisse la fréquence de coupure de cet asservissement. Tous les asservissements connus utilisés sur les simulateurs de mouvement actuels subissent cette contrainte.

En outre, il faut ajouter que le mouvement sinusoïdal de l'axe est non seulement atténué par rapport au signal de consigne mais également déphasé par rapport à celui-ci. Ce déphasage s'accroît notablement lorsque la fréquence augmente. Le déphasage commence à être significatif à des fréquences très inférieures à la fréquence de coupure de l'asservissement.

Les simulateurs de mouvements étant des machines à vocation métrologique, cette atténuation et ce déphasage entraînent de grandes difficultés pour une caractérisation précise des composants à tester.

L'invention a donc pour but de répondre aux inconvénients précités en éliminant ou tout au moins en réduisant fortement toute atténuation et tout déphasage de la grandeur mesurée (position, vitesse ou accélération) par rapport à la consigne sinusoïdale.

Pour cela l'invention porte sur un dispositif d'asservissement d'un simulateur de mouvement, ledit simulateur de mouvement étant modélisé, entre son entrée constituée par un signal de commande u(t) et sa sortie constituée par une grandeur mesurée y(t) (position, vitesse ou accélération de l'axe), par une fonction de transfert $B(z^{-1})/A(z^{-1})$, ledit dispositif d'asservissement comportant un correcteur synthétisé à partir de ladite modélisation du simulateur de mouvement et équivalent à un correcteur RST, le correcteur comportant une entrée de consigne, une entrée de rétroaction sur laquelle est appliquée ladite grandeur mesurée y(t) et une sortie produisant ledit signal de commande u(t), la fonction de transfert entre l'entrée de consigne du correcteur et la grandeur mesurée étant alors $H(z^{-1})/W(z^{-1})$. Selon l'invention le dispositif de rétroaction est caractérisé en ce qu'il comporte un filtre de consigne prenant en entrée un signal de consigne sinusoïdal c(t) ayant une pulsation wc et appliquant en sortie un signal de consigne filtrée c'(t) sur l'entrée de consigne dudit correcteur (20) ; ledit filtre de consigne ayant une fonction de transfert $Rr(z^{-1})/Fr(z^{-1})$ dont le dénominateur $Fr(z^{-1})$ et le numérateur $Rr(z^{-1})$ sont déterminés de manière à assurer, à la pulsation wc, un suivi effectif par le simulateur de mouvement de la consigne sinusoïdale.

Dans un mode de réalisation le numérateur $Rr(z^{-1})$ de la fonction de transfert est tel que l'expression $Fr(z^{-1})W(z^{-1})-Rr(z^{-1})H(z^{-1})$ se factorise sous la forme :

$$D(z^{-1})Lo(z^{-1}) = [1 - 2\cos(wc \cdot Te) \cdot z^{-1} + z^{-2}]Lo(z^{-1}) \; ;$$

et en ce que ledit numérateur $Rr(z^{-1})$ de la fonction de transfert est solution d'une équation dite de Bezout :

$$D(z^{-1})Lo(z^{-1}) + Rr(z^{-1})H(z^{-1}) = Fr(z^{-1})W(z^{-1})$$

pour la pulsation wc du signal de consigne.

De préférence, le dispositif comporte un moyen de déterminer de $Rr(z^{-1})$ apte à résoudre en ligne l'équation de Bezout en fonction du paramètre que constitue la pulsation wc dudit signal de consigne, de sorte que ledit dispositif d'asservissement permet un suivi adaptatif de ladite consigne sinusoïdale.

Selon un autre mode de réalisation, le dispositif comporte :

- un moyen de simulation de l'ensemble formé par le correcteur et par le système physique, produisant une grandeur mesurée idéale ym(t) et ayant comme fonction de transfert $H(z^{-1})/W(z^{-1})$ ;
- un moyen d'estimation de l'atténuation et du déphasage résiduels apte, à partir de la grandeur mesurée réelle y(t) et de la grandeur mesurée idéale ym(t), à déterminer les valeurs de l'atténuation résiduel At et du déphasage résiduel φ, entre le mouvement réel du simulateur de mouvement et la grandeur mesurée idéale ym(t) ;
- un moyen de détermination de $Rr(z^{-1})$ apte à calculer, à la pulsation wc du signal de consigne, ledit numérateur $Rr(z^{-1})$ de la fonction de transfert du filtre de consigne, en fonction de l'atténuation et du déphasage résiduels déterminés par ledit moyen d'estimation, par résolution en ligne du système d'équation :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi}$$

De préférence, le moyen d'estimation de l'atténuation et du déphasage résiduels est fondé sur un algorithme d'identification récursif, par exemple un algorithme des moindres carrés.

De préférence encore, le moyen de détermination de $Rr(z^{-1})$ prend également comme paramètre d'entrée la valeur de la pulsation dudit signal de consigne, de sorte que ledit dispositif d'asservissement présente la fonction de suivi adaptatif de la consigne sinusoïdale.

Avantageusement, le dispositif comporte un moyen d'estimation de la pulsation apte à déterminer la valeur de la pulsation de la consigne appliquée en entrée dudit filtre de consigne.

De préférence, moyen d'estimation de la pulsation est fondé sur un algorithme d'identification récursif, par exemple un algorithme des moindres carrés étendus.

L'invention a également pour objet un procédé d'asservissement d'un simulateur de mouvement, le simulateur de mouvement étant modélisé, entre son entrée constituée par un signal de commande u(t) et sa sortie constituée par une grandeur mesurée y(t) parmi sa position, sa vitesse et son accélération, par une fonction de transfert $B(z^{-1})/A(z^{-1})$, ledit dispositif d'asservissement comportant un correcteur synthétisé à partir de ladite modélisation du simulateur de mouvement et équivalent à un correcteur RST, ledit correcteur comportant une entrée de consigne, une entrée de rétroaction sur laquelle est appliquée ladite grandeur mesurée y(t) et une sortie produisant ledit signal de commande u (t), la fonction de transfert entre l'entrée de consigne du correcteur et la grandeur mesurée étant alors $H(z^{-1})/W(z^{-1})$ ; caractérisé en ce que l'on filtre un signal de consigne sinusoïdal ayant une pulsation wc pour appliquer un signal de consigne filtrée c'(t) sur l'entrée de consigne dudit correcteur ; l'étape de filtrage du signal de consigne se faisant de manière à assurer un suivi effectif par le simulateur de mouvement de la consigne sinusoïdale.

Selon un mode de réalisation le filtrage est réalisé selon une fonction de transfert $Rr(z^{-1})/Fr(z^{-1})$ dont le numérateur $Rr(z^{-1})$ est déterminé pour que l'expression $Fr(z^{-1})W(z^{-1})-Rr(z^{-1})H(z^{-1})$ se factorise sous la forme :

$$D(z^{-1})Lo(z^{-1}) = [1 - 2\cos(wc \cdot Te) \cdot z^{-1} + z^{-2}]Lo(z^{-1})$$

Le numérateur $Rr(z^{-1})$ est déterminé en tant que solution d'une équation dite de Bezout :

$$D(z^{-1})Lo(z^{-1}) + Rr(z^{-1})H(z^{-1}) = Fr(z^{-1})W(z^{-1})$$

à la pulsation wc du signal de consigne.

De préférence, l'on détermine $Rr(z^{-1})$ en ligne en résolvant ladite équation de Bezout en fonction du paramètre que constitue la pulsation wc dudit signal de consigne, de sorte que ledit procédé d'asservissement permet un suivi adaptatif de ladite consigne sinusoïdale.

Selon un autre mode de réalisation :

- on simule le comportement de l'ensemble formé par le correcteur et par le simulateur de mouvement au moyen d'une fonction de transfert $H(z^{-1})/W(z^{-1})$ de manière à produire une grandeur mesurée idéale ym(t) ;
- on estime l'atténuation et le déphasage résiduels entre le mouvement réel du simulateur de mouvement et la grandeur mesurée idéale ym(t) à partir de la grandeur mesurée réelle y(t) et de la grandeur mesurée idéale ym(t) ;
- on détermine ledit numérateur $Rr(z^{-1})$ en fonction de la pulsation wc, de l'atténuation et du déphasage résiduels déterminés à l'étape d'estimation, par résolution en ligne du système d'équation :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi}$$

- on adapte le filtrage de la consigne avec la valeur déterminée de $Rr(z^{-1})$.

De préférence l'étape d'estimation de l'atténuation et du déphasage résiduels est fondée sur un algorithme d'identification récursif, par exemple un algorithme des moindres carrés.

De préférence encore l'étape de détermination du numérateur $Rr(z^{-1})$ on prend également en compte comme paramètre d'entrée la valeur de la pulsation dudit signal de consigne, de sorte que le procédé d'asservissement assure un suivi adaptatif à la valeur instantanée de la consigne sinusoïdale.

Avantageusement, le procédé comporte une étape initiale d'estimation de la pulsation dudit signal de consigne.

De préférence, l'étape d'estimation de la pulsation est fondée sur un algorithme d'identification récursif, par exemple un algorithme des moindres carrés étendus.

L'invention a également pour objet un programme d'ordinateur comportant une suite d'instructions aptes à être chargées dans la mémoire d'un ordinateur et à être exécutées par le calculateur dudit ordinateur. Le programme selon l'invention permet de mettre en oeuvre le procédé d'asservissement selon l'invention.

L'invention sera mieux comprise et d'autres buts, détails, caractéristiques et avantages de celle-ci apparaîtront plus clairement au cours de la description d'un mode de réalisation particulier de l'invention donné uniquement à titre illustratif et non limitatif en référence au dessin annexé. Sur ces dessins :

La figure 1 représente d'un point de vue général une boucle fermée d'asservissement de l'état de la technique ;

La figure 2 est une représentation schématique sous forme de blocs fonctionnels de la boucle d'asservissement de la figure 1 ;

La figure 3 est une représentation schématique de mise en oeuvre d'un filtre de consigne pour un signal de consigne donné ;

La figure 4 est une représentation schématique selon un mode de réalisation de l'invention permettant de suivre les évolutions du signal de consigne et qui reprend essentiellement la figure 3 en y ajoutant des blocs de résolution en ligne de l'équation de Bezout ; et,

La figure 5 est une représentation schématique sous forme de blocs fonctionnels d'un deuxième mode de réalisation de l'invention permettant la suppression d'atténuations et de déphasages résiduels.

Le schéma bloc d'un système bouclé est donné d'une manière très générale par la figure 2. Le système 10 à asservir est modélisé par une fonction de transfert G discrète, échantillonnée à la période Te :

$$G(z^{-1}) = \frac{B(z^{-1})}{A(z^{-1})} \qquad . \qquad (1)$$

Dans l'équation (1), $z = e^{j \cdot w \cdot Te}$ représente l'opérateur «avance d'une période d'échantillonnage ».

Le correcteur ou loi de commande 20 est représenté sous une forme RST (correcteur à deux degrés de liberté), qui est la représentation la plus générale d'un correcteur monovariable. On montre que tout correcteur monovariable linéaire peut être mis sous une forme RST. En particulier les correcteurs du type PID, LQG-LTR monovariable, Hinfini, Crone, etc. peuvent être écrits sous forme RST. La présente invention ne se limite donc pas aux correcteurs RST. La structure du correcteur RST est représentée schématiquement en détail sur la figure 2 par les blocs 21 à 23.

La fonction de transfert entre la consigne c(t) et la mesure y(t) s'écrit alors :

$$\frac{y(t)}{c(t)} = \frac{T(z^{-1})B(z^{-1})}{A(z^{-1})S(z^{-1}) + B(z^{-1})R(z^{-1})} = \frac{H(z^{-1})}{W(z^{-1})} \qquad (2)$$

Cette fonction de transfert est du type « passe-bas » comme cela a été indiqué en introduction, c'est-à-dire que l'atténuation et le déphasage de la mesure par rapport à la consigne augmentent lorsque la fréquence de cette consigne augmente.

La mise en oeuvre d'un filtre de consigne va maintenant être décrite en détail par rapport à la figure 3, pour lequel la pulsation de la consigne sinusoïdale est connue.

Dans un premier temps, on suppose que la modélisation du système à commander est parfaitement réalisée par la fonction de transfert de l'équation (1). C'est-à-dire que la mesure y(t) du système réel à commander se comporte, pour une même entrée, exactement comme la valeur de sortie de la fonction de transfert de l'équation (1).

Selon l'invention, pour assurer un suivi de la consigne sinusoïdale c(t) sans aucune erreur de traînage, la pulsation wc de cette consigne étant connue, on ajoute, en amont du correcteur 20, un filtre de consigne 30 comme cela est représenté sur la figure 3. Le filtre 30 prend en entrée la consigne c(t) et produit en sortie une consigne filtrée c'(t) qui est appliquée en tant que consigne en entrée du correcteur 20. Le filtre de consigne 30 a une fonction de transfert qui s'écrit :

$$\frac{Rr(z^{-1})}{Fr(z^{-1})} \quad\quad (3)$$

L'ensemble de la boucle fermée a alors pour fonction de transfert l'équation :

$$\frac{y(t)}{c(t)} = \frac{Rr(z^{-1})}{Fr(z^{-1})} \cdot \frac{H(z^{-1})}{W(z^{-1})} \quad\quad (4)$$

Il s'agit alors d'adapter la fonction de transfert du filtre 30 pour assurer un suivi de la consigne.

Une manière de faire consiste à définir l'erreur de suivi de consigne par e(t)=c(t)-y(t). A partir de l'équation (4) on obtient :

$$e(t) = c(t) \cdot \left[ 1 - \frac{Rr(z^{-1})H(z^{-1})}{Fr(z^{-1})W(z^{-1})} \right] = c(t) \cdot \left[ \frac{Fr(z^{-1})W(z^{-1}) - Rr(z^{-1})H(z^{-1})}{Fr(z^{-1})W(z^{-1})} \right] \quad (5)$$

On montre que le suivi de consigne s'effectue sans erreur de traînage lorsque le numérateur $Fr(z^{-1})W(z^{-1})$- $Rr(z^{-1})H(z^{-1})$ de l'équation (5) se factorise sous la forme :

$$Fr(z^{-1})W(z^{-1}) - Rr(z^{-1})H(z^{-1}) = D(z^{-1})Lo(z^{-1}) = [1 - 2\cos(wc \cdot Te) \cdot z^{-1} + z^{-2}]Lo(z^{-1})$$

$Fr(z^{-1})$ étant le dénominateur du filtre de consigne 30, il peut être choisi arbitrairement pourvu qu'il s'agisse d'un polynôme stable de degré 2. Les deux inconnues du problème ne sont alors plus que les polynômes $Rr(z^{-1})$ et $Lo(z^{-1})$ qui peuvent être obtenus par la résolution de l'équation :

$$D(z^{-1})Lo(z^{-1}) + Rr(z^{-1})H(z^{-1}) = Fr(z^{-1})W(z^{-1}) \quad\quad (6)$$

L'équation (6) est une équation polynomiale dite de Bézout, dont la résolution est classique en mathématique.

En général, il est également souhaitable que le suivi de consignes statiques soit assuré. Aussi on prend pour polynôme D :

$$D(z^{-1}) = (1 - z^{-1}) \cdot (1 - 2\cos(wc \cdot Te) \cdot z^{-1} + z^{-2}) \quad\quad (7)$$

Dans ce cas $Fr(z^{-1})$ doit être un polynôme stable d'ordre 3.

Il faut noter que tout ce qui vient d'être développé n'est valable que pour des consignes sinusoïdales ayant une pulsation wc donnée.

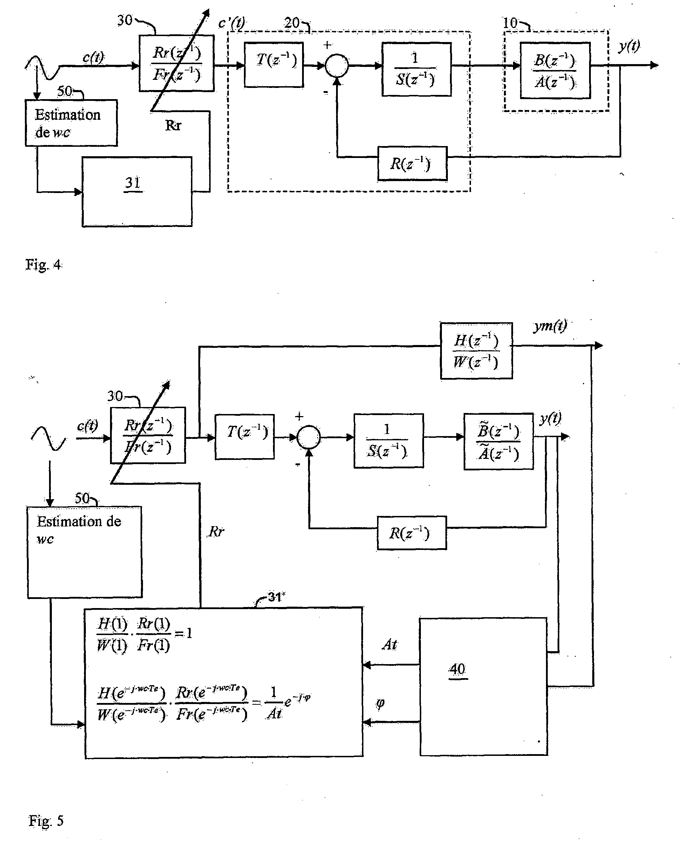

Le mode de réalisation de l'invention maintenant décrit, permet le suivi de consigne quelle que soit la pulsation wc de la consigne sinusoïdale appliquée. Pour cela, le filtre de consigne est modifié de manière à présenter un caractère adaptatif en fonction de la pulsation de la consigne sinusoïdale effectivement appliquée. Pour ce faire, l'équation (6) de Bézout est résolue en ligne par l'algorithme représenté schématiquement par le bloc 31 (cf. figure 4). La résolution de l'équation (6) se fait en fonction du paramètre que constitue la pulsation wc de la consigne.

Par ailleurs, la consigne c(t) de position, de vitesse ou d'accélération peut être soit une consigne externe générée par l'utilisateur du simulateur de mouvement, au moyen par exemple d'un générateur de fréquences, soit une consigne interne. Dans ce dernier cas, il s'agit alors d'une consigne interne au calculateur du simulateur de mouvement qui est générée par un algorithme spécifique. Alors que dans le second cas la pulsation est connue et peut être facilement appliquée en entrée du moyen de détermination de $Rr(z^{-1})$, dans le premier cas la pulsation de consigne n'est pas connue.

Pour le cas d'une pulsation inconnue, il faut alors déterminer cette fréquence en l'estimant au moyen d'un algorithme spécifique. C'est cet algorithme, représenté schématiquement par le bloc fonctionnel 50 sur la figure 4, qui va maintenant être décrit.

Soit s(t) un signal de consigne sinusoïdale centré en 0, échantillonné à la période Te et de pulsation wc (en rad/s). Pour un tel signal, il existe une équation récursive permettant de lier s(t+1) à s(t) et s(t-1). On montre que cette équation récursive est de la forme :

$$s(t+1) = 2 \cdot \cos(wc \cdot Te) \cdot s(t) - s(t-1) \tag{8}$$

Alors, en posant :

$$\begin{aligned} Ys(t+1) &= s(t+1) + s(t-1) \\ Us(t) &= s(t) \end{aligned} \tag{9}$$

On peut écrire :

$$Ys(t+1) = 2 \cdot \cos(wc \cdot Te) \cdot Us(t) \tag{10}$$

Soit :

$$Ys(t+1) = \Theta_s \cdot Us(t) \tag{11}$$

Dans le cas général, s(t) peut être une consigne analogique entachée d'un bruit eb(t) qui est ici supposé être un bruit blanc. On a alors :

$$\begin{aligned} Ys(t+1) &= s(t+1) + s(t-1) + eb(t+1) + eb(t-1) \\ Us(t) &= s(t) + eb(t) \end{aligned} \tag{12}$$

Compte tenu de (20), on peut écrire :

$$Ys(t+1) = \Theta_s \cdot Us(t) + eb(t+1) - \Theta_s \cdot eb(t) + eb(t-1) \tag{13}$$

Afin d'identifier sans biais $\Theta_s$ on peut utiliser par exemple, parmi d'autres algorithmes possibles, l'algorithme des moindres carrés étendus récursifs avec :

$$\Phi(t)^T = \begin{bmatrix} U(t) & \varepsilon(t) & \varepsilon(t-1) \end{bmatrix}$$

(14)

$$\hat{\Theta}(t) = \begin{bmatrix} \hat{\Theta}_s & \hat{c}_1 & \hat{c}_2 \end{bmatrix}$$

L'algorithme d'adaptation paramétrique s'écrit :

$$\hat{\Theta}(t+1) = \hat{\Theta}(t) + F(t) \cdot \Phi(t) \cdot \varepsilon(t+1)$$

(15)

$$F(t+1)^{-1} = \lambda_1 \cdot F(t)^{-1} + \lambda_2 \cdot \Phi(t) \cdot \Phi(t)^t$$

(16)

$$\varepsilon(t+1) = \frac{y(t+1) - \hat{\Theta}(t)^T \cdot \Phi(t)}{1 + \Phi^T(t) \cdot F(t) \cdot \Phi(t)}$$

Où F est une matrice 3x3 initialisée avec la matrice 3x3 suivante :

$$F(0) = 1000 \cdot \begin{bmatrix} 1 & 0 & 0 \\ 0 & 1 & 0 \\ 0 & 0 & 1 \end{bmatrix}$$

Pour plus de précisions sur cet algorithme, on peut se reporter à l'ouvrage de loan Doré Landau « Identification des systèmes » (Ed Hermes 2001).

Dans le système d'équations (16), les variables $\lambda_1, \lambda_2$ sont des scalaires et sont appelées facteurs d'oubli. Il faut que l'on ait les conditions $0 < \lambda_1 \leq 1$ et $0 \leq \lambda_2 < 2$. On peut par exemple choisir $\lambda_1$ compris entre 0,95 et 0,99, et $\lambda_2$ valant l'unité.

Le procédé d'asservissement selon le mode de réalisation de l'invention précédemment décrit permet d'améliorer significativement le suivi des consignes sinusoïdales par rapport aux procédés d'asservissement connus. Cependant ce procédé est imparfait car la fonction de transfert du système à commander $B(z^{-1})/A(z^{-1})$ n'est qu'une modélisation et donc une approximation du système physique réel à asservir. Les différences de comportement entre le modèle et le système réel sont de plus en plus élevées lorsque l'on considère les fréquences croissantes. Un dernier mode de réalisation de l'invention permettant un suivi parfait de la consigne va maintenant être décrit en détail en référence à la figure 5.

Si l'on se restreint à une approche linéaire, la véritable fonction de transfert du système réel est notée $\tilde{B}(z^{-1})/\tilde{A}(z^{-1})$ et ses coefficients sont inconnus. Cette fonction de transfert est de toute façon d'un ordre plus élevé que la fonction de transfert de la modélisation : $B(z^{-1})/A(z^{-1})$.

En conséquence, la fonction de transfert $H(z^{-1})/W(z^{-1})$ utilisée plus haut n'est qu'une approximation de la fonction de transfert réelle correspondante $\tilde{H}(z^{-1})/\tilde{W}(z^{-1})$, qui est également inconnue. Les divergences entre ces deux fonctions de transfert croissent avec la fréquence.

L'équation (6) de Bézout décrite plus haut étant résolue à partir de $H(z^{-1})$ et de $W(z^{-1})$ l'expression calculée de $Rr(z^{-1})$ ne permet pas le suivi parfait d'une consigne sinusoïdale, et ceci essentiellement aux fréquences où il y a divergence entre $H(z^{-1})/W(z^{-1})$ et $\tilde{H}(z^{-1})/\tilde{W}(z^{-1})$, c'est-à-dire aux hautes fréquences où apparaissent à nouveau une atténuation et un déphasage que l'on qualifiera d'atténuation et de déphasage résiduels.

Le procédé selon le troisième mode de réalisation de l'invention consiste, en parallèle à la boucle d'asservissement du système réel caractérisée par la fonction $\tilde{H}(z^{-1})/\tilde{W}(z^{-1})$, à simuler la boucle de régulation idéale fondée sur la modélisation du système physique et caractérisée par la fonction $H(z^{-1})/W(z^{-1})$. La grandeur mesurée réelle est y(t) alors que la grandeur mesurée simulée est ym(t).

Au moyen d'un algorithme récursif représenté de manière schématique par le bloc 40 de la figure 5, on identifie en ligne l'atténuation et le déphasage entre la boucle réelle et la boucle simulée. At et φ sont respectivement l'atténuation et le déphasage résiduels entre le modèle de la boucle fermée idéale et la boucle fermée réelle.

L'algorithme d'identification récursif est fondé sur le principe que, pour des signaux sinusoïdaux centrés en 0, l'on peut exprimer y(t) en fonction de ym(t) à partir de la relation suivante :

$$y(t) = \left( \alpha + \hat{\beta} \cdot z^{-1} \right) \cdot ym(t) \qquad (17)$$

Il est à noter que si le signal sinusoïdal n'est pas centré en 0, on élimine la composante continue au moyen d'un filtre passe-haut.

Compte tenu du fait que $z^{-1} = e^{-j.w.Te}$ et que la fréquence des signaux sinusoïdaux est connue et vaut wc, on peut écrire :

$$y(t) = \left( \alpha + \beta \cdot e^{-j \cdot wc \cdot Te} \right) \cdot ym(t)$$
$$y(t) = \alpha + \left( \beta \cdot \cos(-wc \cdot Te) \right) + j \cdot \beta \cdot \sin(-wc \cdot Te)$$
$$y(t) = At \cdot e^{j \cdot \varphi}$$

C'est-à-dire que l'on a :

$$At = \sqrt{\left( \alpha + \beta \cdot \cos(-wc \cdot Te) \right)^2 + \beta^2 \cdot \sin^2(-wc \cdot Te)} \qquad (18)$$

$$\varphi = \arctan\left( \frac{\beta \cdot \sin(-wc \cdot Te)}{\alpha + \beta \cdot \cos(-wc \cdot Te)} \right)$$

Ainsi, pour estimer At et φ, il suffit d'identifier en ligne de façon récursive α et β. Les méthodes d'identification récursives sont nombreuses et on peut prendre par exemple la méthode des moindres carrés récursifs.

Cette méthode va maintenant être explicitée, mais, pour plus de détail, on pourra se reporter à l'ouvrage de Ioan Doré Landau « Identification des systèmes » (Ed Hermes 2001).

En adoptant une notation matricielle, on pose $\Theta^T = [\alpha \ \beta]$ les paramètres du modèle à identifier, $\Phi(t)^T = [ym(t) \ ym(t-1)]$ le vecteur des observations, et $\hat{\Theta}^T(t) = [\hat{\alpha}(t) \ \hat{\beta}(t)]$ l'estimation de $\Theta^T$ à l'instant t. L'algorithme des moindres carrés récursifs s'écrit alors :

$$\hat{\Theta}(t+1) = \hat{\Theta}(t) + F(t) \cdot \Phi(t) \cdot \varepsilon(t+1) \qquad (19)$$

Et l'on a :

$$F(t+1)^{-1} = \lambda_1 \cdot F(t)^{-1} + \lambda_2 \cdot \Phi(t) \cdot \Phi(t)^T \qquad (20)$$

$$\varepsilon(t+1) = \frac{y(t+1) - \hat{\Theta}(t)^T \cdot \Phi(t)}{1 + \Phi^T(t) \cdot F(t) \cdot \Phi(t)}$$

F(t) qui est une matrice 2x2 dans ce cas précis est initialisée par exemple de la manière suivante :

$$F(0) = 1000 \cdot \begin{bmatrix} 1 & 0 \\ 0 & 1 \end{bmatrix}$$

Dans le système d'équations (14), les variables $\lambda_1, \lambda_2$ sont des scalaires et sont appelées facteurs d'oubli. Il faut que l'on ait les conditions $0 < \lambda_1 \leq 1$ et $0 \leq \lambda_2 < 2$. On peut par exemple choisir $\lambda_1$ compris entre 0,95 et 0,99, et $\lambda_2$ valant l'unité.

Dans ce cas le critère J minimisé par l'algorithme est :

$$J(t) = \sum_{i=1}^{t} \lambda_1^{(t-i)} \cdot \left( y(i) - \hat{\Theta}^T(t) \cdot \Phi(i-1) \right)^2 \qquad (21)$$

Puis, après l'étape d'estimation par identification récursive de At et de φ, le polynôme $Rr(z^{-1})$ est calculé en ligne. $Rr(z^{-1})$ est déterminé au niveau du moyen de détermination 31' de sorte qu'il assure le suivi de consignes statiques et qu'à la pulsation wc le déphasage et l'atténuation résiduels soient compensés. Pour ce faire, il faut résoudre, toujours en ligne, le système d'équations suivant :

Contrainte en régime statique :

$$\frac{H(1)}{W(1)} \cdot \frac{Rr(1)}{Fr(1)} = 1 \qquad (22)$$

Compensation de l'atténuation et du déphasage résiduels à la pulsation wc :

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi} \qquad (23)$$

L'équation (23) étant une équation complexe, elle se subdivise en deux équations (partie réelle et partie imaginaire). On aboutit donc à trois équations permettant de trouver les trois coefficients du polynôme $Rr(z^{-1})$. La valeur ainsi calculée de $Rr(z^{-1})$ sert à adapter la fonction de transfert du filtre 30, étant entendu que le dénominateur $Fr(z^{-1})$ peut être choisit librement pourvu qu'il s'agisse d'un polynôme de stabilité d'ordre 3.

Avantageusement, ce dernier mode de réalisation autorise un suivi adaptatif de la pulsation wc. Il suffit pour cela de considérer la valeur de la pulsation wc intervenant dans le système d'équations à résoudre comme un paramètre. Ce paramètre wc est appliqué en entrée du moyen de détermination 31' comme cela est représenté sur la figure 5. De plus, un moyen de détermination de la pulsation 50, tel que décrit plus haut à la figure 4, peut être intégré dans ce dernier mode de réalisation si la pulsation wc de la consigne est une donnée externe au calculateur apte à mettre en oeuvre le procédé d'asservissement selon l'invention.

La présente description présente des modes de réalisation particuliers de dispositifs et de procédés permettant d'assurer le suivi de consignes sinusoïdales sans aucune erreur de traînage par un simulateur de mouvement. Bien que la description détaillée ait porté sur un simulateur de mouvement de rotation autour d'un unique axe, l'homme du métier comprendra que l'invention s'applique également aux simulateurs de mouvement ayant plusieurs axe autour desquels des mouvements de rotation instantanée peuvent être générés et aux simulateurs de mouvement de translation le long d'une ou de plusieurs directions de déplacement.

**Revendications**

**1.** Dispositif d'asservissement à rétroaction d'un simulateur de mouvement (10) permettant un suivi effectif par le simulateur d'une consigne, ledit simulateur de mouvement étant modélisé, entre son entrée constituée par un signal de commande u(t) et sa sortie constituée par une grandeur mesurée y(t) parmi sa vitesse, sa position ou son accélération, par une fonction de transfert $B(z^{-1})/A(z^{-1})$, ledit dispositif d'asservissement comportant un correcteur (20) synthétisé à partir de ladite modélisation du simulateur de mouvement et équivalent à un correcteur RST, ledit correcteur comportant une entrée de consigne, une entrée de rétroaction sur laquelle est appliquée ladite grandeur mesurée y(t) et une sortie produisant ledit signal de commande u(t), la fonction de transfert entre l'entrée de consigne du correcteur et la grandeur mesurée étant alors $H(z^{-1})/W(z^{-1})$, **caractérisé en ce qu'**il comporte en outre un filtre de consigne (30) prenant en entrée la consigne qui est un signal de consigne sinusoïdal c(t) ayant une pulsation wc et appliquant en sortie un signal de consigne filtrée c'(t) sur l'entrée de consigne dudit correcteur (20) ; ledit filtre de consigne ayant une fonction de transfert $Rr(z^{-1})/Fr(z^{-1})$, et étant adaptatif,
et **en ce que** ledit numérateur $Rr(z^{-1})$ de la fonction de transfert est tel que l'expression $Fr(z^{-1})W(z^{-1}) - Rr(z^{-1})H(z^{-1})$ se factorise sous la forme :

$$D(z^{-1})Lo(z^{-1}) = [1 - 2\cos(wc \cdot Te) \cdot z^{-1} + z^{-2}]Lo(z^{-1}) \ ;$$

et **en ce que** ledit numérateur $Rr(z^{-1})$ de la fonction de transfert est solution d'une équation dite de Bezout :

$$D(z^{-1})Lo(z^{-1}) + Rr(z^{-1})H(z^{-1}) = Fr(z^{-1})W(z^{-1})$$

pour la pulsation wc du signal de consigne, et **en ce qu'**il comporte un moyen de déterminer $Rr(z^{-1})$ apte à résoudre en ligne l'équation de Bezout en fonction du paramètre que constitue la pulsation wc dudit signal de consigne.

2. Dispositif d'asservissement à rétroaction d'un simulateur de mouvement (10) permettant un suivi effectif par le simulateur d'une consigne, ledit simulateur de mouvement étant modélisé, entre son entrée constituée par un signal de commande u(t) et sa sortie constituée par une grandeur mesurée y(t) parmi sa vitesse, sa position ou son accélération, par une fonction de transfert $B(z^{-1})/A(z^{-1})$, ledit dispositif d'asservissement comportant un correcteur (20) synthétisé à partir de ladite modélisation du simulateur de mouvement et équivalent à un correcteur RST, ledit correcteur comportant une entrée de consigne, une entrée de rétroaction sur laquelle est appliquée ladite grandeur mesurée y(t) et une sortie produisant ledit signal de commande u(t), la fonction de transfert entre l'entrée de consigne du correcteur et la grandeur mesurée étant alors $H(z^{-1})/W(z^{-1})$; **caractérisé en ce qu'**il comporte en outre un filtre de consigne (30) prenant en entrée la consigne qui est un signal de consigne sinusoïdal c(t) ayant une pulsation wc et appliquant en sortie un signal de consigne filtrée c'(t) sur l'entrée de consigne dudit correcteur (20) ; ledit filtre de consigne ayant une fonction de transfert $Rr(z^{-1})/Fr(z^{-1})$ et étant adaptatif, et **en ce qu'**il comporte :

- un moyen de simulation de l'ensemble formé par le correcteur et par le système physique, produisant une grandeur mesurée idéale ym(t) et ayant comme fonction de transfert $H(z^{-1})/W(z^{-1})$ ;
- un moyen d'estimation de l'atténuation et du déphasage résiduels apte, à partir de la grandeur mesurée réelle y(t) et de la grandeur mesurée idéale ym(t), à déterminer les valeurs de l'atténuation résiduel At et du déphasage résiduel φ, entre le mouvement réel y(t) du simulateur de mouvement et la grandeur mesurée idéale ym(t) ;
- un moyen de détermination de $Rr(z^{-1})$ apte à calculer en ligne, à la pulsation wc du signal de consigne, ledit numérateur $Rr(z^{-1})$ de la fonction de transfert du filtre de consigne, en fonction de l'atténuation et du déphasage résiduels déterminés par ledit moyen d'estimation, par résolution en ligne du système d'équations :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi}$$

le moyen de détermination de $Rr(z^{-1})$ prenant également comme paramètre d'entrée la valeur de la pulsation dudit signal de consigne.

**3.** Dispositif d'asservissement selon la revendication 2, **caractérisé en ce que** ledit moyen d'estimation de l'atténuation et du déphasage résiduels est fondé sur un algorithme d'identification récursif, par exemple un algorithme des moindres carrés.

**4.** Dispositif d'asservissement selon l'une des revendications précédentes, **caractérisé en ce qu'**il comporte un moyen d'estimation de la pulsation apte à déterminer ladite valeur de la pulsation de la consigne appliquée en entrée dudit filtre de consigne.

**5.** Dispositif d'asservissement selon la revendication 4, **caractérisé en ce que** ledit moyen d'estimation de la pulsation est fondé sur un algorithme d'identification récursif, par exemple un algorithme des moindres carrés étendus.

**6.** Procédé d'asservissement avec rétroaction d'un simulateur de mouvement permettant un suivi effectif par le simulateur d'une consigne, ledit simulateur de mouvement étant modélisé, entre son entrée constituée par un signal de commande u(t) et sa sortie constituée par une grandeur mesurée y(t) parmi sa position, sa vitesse et son accélération, par une fonction de transfert $B(z^{-1})/A(z^{-1})$, ledit dispositif d'asservissement comportant un correcteur (20) synthétisé à partir de ladite modélisation du simulateur de mouvement et équivalent à un correcteur RST, ledit correcteur comportant une entrée de consigne, une entrée de rétroaction sur laquelle est appliquée ladite grandeur mesurée y(t) et une sortie produisant ledit signal de commande u(t), la fonction de transfert entre l'entrée de consigne du correcteur et la grandeur mesurée étant alors $H(z^{-1})/W(z^{-1})$ ; **caractérisé en ce que** l'on filtre un signal de consigne sinusoïdal (30) ayant une pulsation wc pour appliquer un signal de consigne filtrée c'(t) sur l'entrée de consigne dudit correcteur (20) ; le filtrage du signal de consigne étant adaptatif,
et **en ce que** le filtrage est réalisé selon une fonction de transfert $Rr(z^{-1})/Fr(z^{-1})$ dont le numérateur $Rr(z^{-1})$ est déterminé pour que l'expression $Fr(z^{-1})W(z^{-1}) - Rr(z^{-1})H(z^{-1})$ se factorise sous la forme :

$$D(z^{-1})Lo(z^{-1}) = [1 - 2\cos(wc \cdot Te) \cdot z^{-1} + z^{-2}]Lo(z^{-1}) \ ;$$

et dont le numérateur $Rr(z^{-1})$ est déterminé en tant que solution d'une équation dite de Bezout :

$$D(z^{-1})Lo(z^{-1}) + Rr(z^{-1})H(z^{-1}) = Fr(z^{-1})W(z^{-1})$$

pour la pulsation wc du signal de consigne et **en ce que** l'on détermine $Rr(z^{-1})$ en ligne en résolvant ladite équation de Bezout en fonction du paramètre que constitue la pulsation wc dudit signal de consigne.

**7.** Procédé d'asservissement avec rétroaction d'un simulateur de mouvement permettant un suivi effectif par le simulateur d'une consigne, ledit simulateur de mouvement étant modélisé, entre son entrée constituée par un signal de commande u(t) et sa sortie constituée par une grandeur mesurée y(t) parmi sa position, sa vitesse et son accélération, par une fonction de transfert $B(z^{-1})/A(z^{-1})$, ledit dispositif d'asservissement comportant un correcteur (20) synthétisé à partir de ladite modélisation du simulateur de mouvement et équivalent à un correcteur RST, ledit correcteur comportant une entrée de consigne, une entrée de rétroaction sur laquelle est appliquée ladite grandeur mesurée y(t) et une sortie produisant ledit signal de commande u(t), la fonction de transfert entre l'entrée de consigne du correcteur et la grandeur mesurée étant alors $H(z^{-1})/W(z^{-1})$ ; **caractérisé en ce que** l'on filtre un signal de consigne sinusoïdal (30) ayant une pulsation wc pour appliquer un signal de consigne filtrée c'(t) sur l'entrée de consigne dudit correcteur (20) ; le filtrage du signal de consigne étant adaptatif, et
**en ce que** :

- on simule le comportement de l'ensemble formé par le correcteur et par le simulateur de mouvement au moyen d'une fonction de transfert $H(z^{-1})/W(z^{-1})$ de manière à produire une grandeur mesurée idéale ym(t) ;
- on estime l'atténuation At et le déphasage φ résiduels entre le mouvement réel y (t) du simulateur de mouvement et la grandeur mesurée idéale ym(t) à partir de la grandeur mesurée réelle y(t) et de la grandeur mesurée idéale ym(t) ;
- on détermine ledit numérateur $Rr(z^{-1})$ en fonction de la pulsation wc prise comme paramètre, de l'atténuation et du déphasage résiduels déterminés à l'étape d'estimation, par résolution en ligne du système d'équation :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi}$$

- on adapte le filtrage de la consigne avec la valeur déterminée de $Rr(z^{-1})$.

8. Procédé d'asservissement selon la revendication 7, **caractérisé en ce que** ladite étape d'estimation de l'atténuation et du déphasage résiduels est fondée sur un algorithme d'identification récursif, par exemple un algorithme des moindres carrés.

9. Procédé d'asservissement selon l'une des revendications 6 à 8, **caractérisé en ce qu'**il comporté une étape initiale d'estimation de la pulsation dudit signal de consigne.

10. Procédé d'asservissement selon la revendication 9, **caractérisé en ce que** ladite étape d'estimation de la pulsation est fondée sur un algorithme d'identification récursif, par exemple un algorithme des moindres carrés étendus.

11. Procédé d'asservissement selon l'une des revendications 6 à 10, **caractérisé en ce qu'**il est mis en oeuvre par un programme d'ordinateur comportant une suite d'instructions aptes à être chargées dans la mémoire d'un ordinateur et à être exécutées par le calculateur dudit ordinateur pour générer un signal de commande u(t) du simulateur de mouvement.

## Claims

1. A retro-action control device of a movement simulator (10) enabling effective tracking by the simulator of a reference, said movement simulator being modelled, between its input formed of a control signal u(t) and its output formed of a measured magnitude y(t) among its rate, its position or its acceleration, by a transfer function $B(z^{-1})/A(z^{-1})$, said control device including a controller (20) synthesised from said modelling of the movement simulator and equivalent to a RST controller, said controller comprising a reference input, a retro-action input whereon is applied said measured magnitude y(t) and an output producing said control signal u(t), the transfer function between the reference input of the controller and the measured magnitude then being $H(z^{-1})/W(z^{-1})$; **characterised in that** it comprises moreover a reference filter (30) whose input is a sinusoidal reference signal c(t) at a frequency wc and applying a filtered reference signal c'(t) on the reference input of said controller (20) ; said reference filter having a transfer function $Rr(z^{-1})/Fr(z^{-1})$ and being adaptive,
and **in that** said numerator $Rr(z^{-1})$ of the transfer function is such as the expression $Fr(z^{-1})W(z^{-1}) - Rr(z^{-1})H(z^{-1})$ is factorised in the form:

$$D(z^{-1})Lo(z^{-1}) = [1 - 2\cos(wc \cdot Te) \cdot z^{-1} + z^{-2}]Lo(z^{-1}) \; ;$$

and **in that** said numerator $Rr(z^{-1})$ of the transfer function is the solution of a so-called Bezout equation :

$$D(z^{-1})Lo(z^{-1}) + Rr(z^{-1})H(z^{-1}) = Fr(z^{-1})W(z^{-1})$$

for the frequency wc of the reference signal, and **in that** it includes a means to determine $Rr(z^{-1})$ capable of solving on line the Bezout equation according to the parameter formed by the frequency wc of said reference signal.

2. A retro-action control device of a movement simulator (10) enabling effective tracking by the simulator of a reference, said movement simulator being modelled, between its input formed of a control signal u(t) and its output formed of a measured magnitude y(t) among its rate, its position or its acceleration, by a transfer function $B(z^{-1})/A(z^{-1})$, said control device including a controller (20) synthesised from said modelling of the movement simulator and equivalent to a RST controller, said controller comprising a reference input, a retro-action input whereon is applied said measured magnitude y(t) and an output producing said control signal u(t), the transfer function between the reference input of the controller and the measured magnitude then being $H(z^{-1})/W(z^{-1})$; **characterised in that** it comprises moreover a reference filter (30) whose input is a sinusoidal reference signal c(t) at a frequency wc and applying a filtered reference signal c'(t) on the reference input of said controller (20) ; said reference filter having a transfer function $Rr(z^{-1})/Fr(z^{-1})$ and being adaptive, and

**in that** it comprises :

- a means for simulating the assembly formed by the controller and by the physical system, producing an ideal measured magnitude ym(t) and having as a transfer function $H(z^{-1})/W(z^{-1})$ ;
- a means for estimating the residual attenuation and phase-shift capable, from the actual measured magnitude y(t) and the ideal measured magnitude ym(t), to determine the values of the residual attenuation At and of the residual phase-shift $\varphi$, between the actual movement y(t) of the movement simulator and the ideal measured magnitude ym(t);
- a means to determine $Rr(z^{-1})$ capable of calculating on line, to the frequency wc of the reference signal, said numerator $Rr(z^{-1})$ of the transfer function of the reference filter, in relation to the residual attenuation and phase-shift determined by said estimating means, by on-line resolution of the system of equations :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j \cdot \varphi}$$

the means to determine $Rr(z^{-1})$ taking also as an input parameter the value of the frequency of said reference signal.

3. A control device according to claim 2, **characterised in that** said estimating means of the residual attenuation and phase-shift is based on a recursive identification algorithm, for instance a least square algorithm.

4. A control device according to any of the previous claims, **characterised in that** it comprises a means for estimating the frequency capable of determining said value of the frequency of the reference applied at input of said reference filter.

5. A control device according to claim 4, **characterised in that** said estimating means of the frequency is based on a recursive identification algorithm, for instance an extended least square algorithm.

6. A retro-action control method of a movement simulator enabling effective tracking by the simulator of a reference, said movement simulator being modelled, between its input formed of a control signal u(t) and its output formed of a measured magnitude y(t) among its position, its rate and its acceleration, by a transfer function $B(z^{-1})/A(z^{-1})$, said control device including a controller (20) synthesised from said modelling of the movement simulator and equivalent to a RST controller, said controller comprising a reference input, a retro-action input whereon is applied said measured magnitude y(t) and an output producing said control signal u(t), the transfer function between the reference input of the controller and the measured magnitude then being $H(z^{-1})/W(z^{-1})$; **characterised in that** a sinusoidal reference signal (30) having a frequency wc is filtered for applying a filtered reference signal c'(t) on the reference input of said controller (20) ; the filtering of the reference signal being adaptive, and **in that** the filtering is provided according to a transfer function $Rr(z^{-1})/Fr(z^{-1})$ whereof the numerator $Rr(z^{-1})$ is determined so that the expression $Fr(z^{-1})W(z^{-1})-Rr(z^{-1})H(z^{-1})$ is factorised in the form :

$$D(z^{-1})Lo(z^{-1}) = [1 - 2\cos(wc \cdot Te) \cdot z^{-1} + z^{-2}]Lo(z^{-1}) \; ;$$

whereof the numerator $Rr(z^{-1})$ is determined as a solution of a so-called Bezout equation :

$$D(z^{-1})Lo(z^{-1}) + Rr(z^{-1})H(z^{-1}) = Fr(z^{-1})W(z^{-1})$$

for the frequency wc of the reference signal and **in that** $Rr(z^{-1})$ is determined on line while solving on line said Bezout equation according to the parameter formed by the frequency wc of said reference signal.

7. A retro-action control method of a movement simulator enabling effective tracking by the simulator of a reference, said movement simulator being modelled, between its input formed of a control signal u(t) and its output formed of a measured magnitude y(t) among its position, its rate and its acceleration, by a transfer function $B(z^{-1})/A(z^{-1})$, said control device including a controller (20) synthesised from said modelling of the movement simulator and equivalent to a RST controller, said controller comprising a reference input, a retro-action input whereon is applied said measured magnitude y(t) and an output producing said control signal u(t), the transfer function between the reference input of the controller and the measured magnitude then being $H(z^{-1})/W(z^{-1})$; **characterised in that** a sinusoidal reference signal (30) having a frequency wc is filtered for applying a filtered reference signal c'(t) on the reference input of said controller (20) ; the filtering of the reference signal being adaptive, and
**in that**:

- the behaviour of the assembly formed by the controller and by the movement simulator is simulated by means of a transfer function $H(z^{-1})/W(z^{-1})$ so as to provide an ideal measured magnitude ym(t);
- the residual attenuation At and the residual phase-shift $\varphi$ between the actual movement y(t) of the movement simulator and the ideal measured magnitude ym(t) is estimated from the actual measured magnitude y(t) and the ideal measured magnitude ym(t) ;
- said numerator $Rr(z^{-1})$ is determined in relation to the frequency wc taken as a parameter, of the residual attenuation and phase-shift determined in the estimating step, by on-line resolution of the system of equations :

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At}e^{-j \cdot \varphi}$$

- the filtering of the reference is adapted with the determined value of $Rr(z^{-1})$.

8. A control method according to claim 7, **characterised in that** said estimating means of the residual attenuation and phase-shift is based on a recursive identification algorithm, for instance a least square algorithm.

9. A control method according to any of the claims 6 to 8, **characterised in that** it comprises an initial step for estimating the frequency of said reference signal.

10. A control method according to claim 9, **characterised in that** said estimating means of the frequency is based on a recursive identification algorithm, for instance an extended least square algorithm.

11. A control method according to any of the claims 6 to 10, **characterised in that** it is implemented by a computer program comprising a series of instructions capable of being loaded into the memory of a computer and of being executed by the calculator of said computer for generating a control signal u(t) of the movement simulator.

**Patentansprüche**

1. Rückkopplungsregelvorrichtung eines Bewegungssimulators (10), die eine effektive Nachführung entsprechend einer Sollgröße durch den Simulator ermöglicht, wobei der Bewegungssimulator zwischen seinem Eingang, der aus einem Steuersignal u(t) besteht, und seinem Ausgang, der aus einer Messgröße y(t) besteht, die seine Geschwindigkeit, seine Position oder seine Beschleunigung ist, durch eine Übertragungsfunktion $B(z^{-1})/A(z^{-1})$ modelliert ist, wobei die Regelvorrichtung eine Korrektureinrichtung (20) aufweist, die ausgehend von der Modellierung des Bewegungssimulators synthetisiert ist und zu einer RST-Korrektureinrichtung äquivalent ist, wobei die Korrektureinrichtung einen Solleingang, einen Rückkopplungseingang, an welchen die Messgröße y(t) angelegt wird, und einen Ausgang, der das Steuersignal u(t) erzeugt, aufweist, wobei die Übertragungsfunktion zwischen dem Solleingang der Korrektureinrichtung und der Messgröße dann $H(z^{-1})/W(z^{-1})$ ist; **dadurch gekennzeichnet, dass** sie außerdem ein Sollwertfilter (30) aufweist, dessen Eingangssignal die Sollgröße ist, welche ein sinusförmiges Sollsignal c(t) mit einer Kreisfrequenz wc ist, und das am Ausgang ein gefiltertes Sollsignal c'(t) an den Solleingang der Korrektureinrichtung (20) anlegt; wobei das Sollwertfilter eine Übertragungsfunktion $Rr(z^{-1})/Fr(z^{-1})$ aufweist und adaptiv ist, und

   und **dadurch**, dass der Zähler $Rr(z^{-1})$ der Übertragungsfunktion so beschaffen ist, dass der Ausdruck $Fr(z^{-1})W(z^{-1})-Rr(z^{-1})H(z^{-1})$ faktorisierbar ist in der Form

$$D(z^{-1})Lo(z^{-1}) = [1 - 2\cos(wc \cdot Te) \cdot z^{-1} + z^{-2}]Lo(z^{-1}) \; ;$$

   und **dadurch**, dass der Zähler $Rr(z^{-1})$ der Übertragungsfunktion Lösung einer so genannten Bezout-Gleichung

$$D(z^{-1})Lo(z^{-1}) + Rr(z^{-1})H(z^{-1}) = Fr(z^{-1})W(z^{-1})$$

   für die Kreisfrequenz wc des Sollsignals ist, und **dadurch**, dass sie ein Mittel zum Bestimmen von $Rr(z^{-1})$ aufweist, das geeignet ist, online die Bezout-Gleichung in Abhängigkeit von dem Parameter zu lösen, den die Kreisfrequenz wc des Sollsignals darstellt.

2. Rückkopplungsregelvorrichtung eines Bewegungssimulators (10), die eine effektive Nachführung entsprechend einer Sollgröße durch den Simulator ermöglicht, wobei der Bewegungssimulator zwischen seinem Eingang, der aus einem Steuersignal u(t) besteht, und seinem Ausgang, der aus einer Messgröße y(t) besteht, die seine Geschwindigkeit, seine Position oder seine Beschleunigung ist, durch eine Übertragungsfunktion $B(z^{-1})/A(z^{-1})$ modelliert ist, wobei die Regelvorrichtung eine Korrektureinrichtung (20) aufweist, die ausgehend von der Modellierung des Bewegungssimulators synthetisiert ist und zu einer RST-Korrektureinrichtung äquivalent ist, wobei die Korrektureinrichtung einen Solleingang, einen Rückkopplungseingang, an welchen die Messgröße y(t) angelegt wird, und einen Ausgang, der das Steuersignal u(t) erzeugt, aufweist, wobei die Übertragungsfunktion zwischen dem Solleingang der Korrektureinrichtung und der Messgröße dann $H(z^{-1})/W(z^{-1})$ ist; **dadurch gekennzeichnet, dass** sie außerdem ein Sollwertfilter (30) aufweist, dessen Eingangssignal die Sollgröße ist, welche ein sinusförmiges Sollsignal c(t) mit einer Kreisfrequenz wc ist, und das am Ausgang ein gefiltertes Sollsignal c'(t) an den Solleingang der Korrektureinrichtung (20) anlegt; wobei das Sollwertfilter eine Übertragungsfunktion $Rr(z^{-1})/Fr(z^{-1})$ aufweist und adaptiv ist, und
   und **dadurch**, dass sie aufweist:

   - ein Mittel zur Simulation der von der Korrektureinrichtung und von dem physikalischen System gebildeten Gesamtheit, das eine ideale Messgröße ym(t) erzeugt und $H(z^{-1})/W(z^{-1})$ als Übertragungsfunktion hat;
   - ein Mittel zur Schätzung der Restdämpfung und der Restphasenverschiebung, das geeignet ist, ausgehend von der realen Messgröße y(t) und der idealen Messgröße ym(t), die Werte der Restdämpfung At und der Restphasenverschiebung φ zwischen der realen Bewegung y(t) des Bewegungssimulators und der idealen Messgröße ym(t) zu bestimmen;
   - ein Mittel zur Bestimmung von $Rr(z^{-1})$, das geeignet ist, online, bei der Kreisfrequenz wc des Sollsignals, den Zähler $Rr(z^{-1})$ der Übertragungsfunktion des Sollwertfilters in Abhängigkeit von der Restdämpfung und der Restphasenverschiebung zu berechnen, die durch das Mittel zur Schätzung bestimmt wurden, durch Lösung des folgenden Gleichungssystems online:

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At} e^{-j\varphi}$$

wobei das Mittel zur Bestimmung von $Rr(z^{-1})$ außerdem den Wert der Kreisfrequenz des Sollsignals als Eingangsparameter verwendet.

3. Regelvorrichtung nach Anspruch 2, **dadurch gekennzeichnet, dass** das Mittel zur Schätzung der Restdämpfung und der Restphasenverschiebung auf einem rekursiven Identifikationsalgorithmus beruht, zum Beispiel einem Algorithmus der kleinsten Quadrate.

4. Regelvorrichtung nach einem der vorhergehenden Ansprüche, **dadurch gekennzeichnet, dass** sie ein Mittel zur Schätzung der Kreisfrequenz aufweist, das geeignet ist, den Wert der Kreisfrequenz der Sollgröße zu bestimmen, die am Eingang des Sollwertfilters anliegt.

5. Regelvorrichtung nach Anspruch 4, **dadurch gekennzeichnet, dass** das Mittel zur Schätzung der Kreisfrequenz auf einem rekursiven Identifikationsalgorithmus beruht, zum Beispiel einem Algorithmus der erweiterten kleinsten Quadrate.

6. Regelverfahren mit Rückkopplung eines Bewegungssimulators, das eine effektive Nachführung entsprechend einer Sollgröße durch den Simulator ermöglicht, wobei der Bewegungssimulator zwischen seinem Eingang, der aus einem Steuersignal u(t) besteht, und seinem Ausgang, der aus einer Messgröße y(t) besteht, die seine Position, seine Geschwindigkeit oder seine Beschleunigung ist, durch eine Übertragungsfunktion $B(z^{-1})/A(z^{-1})$ modelliert wird, wobei die Regelvorrichtung eine Korrektureinrichtung (20) aufweist, die ausgehend von der Modellierung des Bewegungssimulators synthetisiert ist und zu einer RST-Korrektureinrichtung äquivalent ist, wobei die Korrektureinrichtung einen Solleingang, einen Rückkopplungseingang, an welchen die Messgröße y(t) angelegt wird, und einen Ausgang, der das Steuersignal u(t) erzeugt, aufweist, wobei die Übertragungsfunktion zwischen dem Solleingang der Korrektureinrichtung und der Messgröße dann $H(z^{-1})/W(z^{-1})$ ist; **dadurch gekennzeichnet, dass** ein sinusförmiges Sollsignal (30) mit einer Kreisfrequenz wc gefiltert wird, um ein gefiltertes Sollsignal c'(t) an den Solleingang der Korrektureinrichtung (20) anzulegen; wobei die Filtration des Sollsignals adaptiv ist, und **dadurch**, dass die Filtration gemäß einer Übertragungsfunktion $Rr(z^{-1})/Fr(z^{-1})$ durchgeführt wird, deren Zähler $Rr(z^{-1})$ so bestimmt wird, dass der Ausdruck $Fr(z^{-1})W(z^{-1})-Rr(z^{-1})H(z^{-1})$ faktorisierbar ist in der Form

$$D(z^{-1})Lo(z^{-1}) = [1 - 2\cos(wc \cdot Te) \cdot z^{-1} + z^{-2}]Lo(z^{-1}) \; ;$$

und **dadurch**, dass der Zähler $Rr(z^{-1})$ als Lösung einer so genannten Bezout-Gleichung

$$D(z^{-1})Lo(z^{-1}) + Rr(z^{-1})H(z^{-1}) = Fr(z^{-1})W(z^{-1})$$

für die Kreisfrequenz wc des Sollsignals bestimmt wird, und **dadurch**, dass $Rr(z^{-1})$ online bestimmt wird, indem die Bezout-Gleichung in Abhängigkeit von dem Parameter gelöst wird, den die Kreisfrequenz wc des Sollsignals darstellt.

17

7. Regelverfahren mit Rückkopplung eines Bewegungssimulators, das eine effektive Nachführung entsprechend einer Sollgröße durch den Simulator ermöglicht, wobei der Bewegungssimulator zwischen seinem Eingang, der aus einem Steuersignal u(t) besteht, und seinem Ausgang, der aus einer Messgröße y(t) besteht, die seine Position, seine Geschwindigkeit oder seine Beschleunigung ist, durch eine Übertragungsfunktion $B(z^{-1})/A(z^{-1})$ modelliert wird, wobei die Regelvorrichtung eine Korrektureinrichtung (20) aufweist, die ausgehend von der Modellierung des Bewegungssimulators synthetisiert ist und zu einer RST-Korrektureinrichtung äquivalent ist, wobei die Korrektureinrichtung einen Solleingang, einen Rückkopplungseingang, an welchen die Messgröße y(t) angelegt wird, und einen Ausgang, der das Steuersignal u(t) erzeugt, aufweist, wobei die Übertragungsfunktion zwischen dem Solleingang der Korrektureinrichtung und der Messgröße dann $H(z^{-1})/W(z^{-1})$ ist; **dadurch gekennzeichnet, dass** ein sinusförmiges Sollsignal (30) mit einer Kreisfrequenz wc gefiltert wird, um ein gefiltertes Sollsignal c'(t) an den Solleingang der Korrektureinrichtung (20) anzulegen; wobei die Filtration des Sollsignals adaptiv ist, und **dadurch**, dass:

- das Verhalten der von der Korrektureinrichtung und von dem Bewegungssimulator gebildeten Gesamtheit durch eine Übertragungsfunktion $H(z^{-1})/W(z^{-1})$ simuliert wird, so dass eine ideale Messgröße ym(t) erzeugt wird;
- die Restdämpfung At und die Restphasenverschiebung φ zwischen der realen Bewegung y(t) des Bewegungssimulators und der idealen Messgröße ym(t) ausgehend von der realen Messgröße y(t) und der idealen Messgröße ym(t) geschätzt werden;
- der Zähler $Rr(z^{-1})$ in Abhängigkeit von der als Parameter verwendeten Kreisfrequenz wc sowie von der Restdämpfung und der Restphasenverschiebung, die im Schritt der Schätzung bestimmt wurden, durch Lösung des folgenden Gleichungssystems on-line bestimmt wird:

$$\frac{H(1)}{W(1)} \cdot \frac{Rr(1)}{Fr(1)} = 1$$

$$\frac{H(e^{-j \cdot wc \cdot Te})}{W(e^{-j \cdot wc \cdot Te})} \cdot \frac{Rr(e^{-j \cdot wc \cdot Te})}{Fr(e^{-j \cdot wc \cdot Te})} = \frac{1}{At}e^{-j\varphi}$$

- die Filtration der Sollgröße mit dem bestimmten Wert von $Rr(z^{-1})$ angepasst wird.

8. Regelverfahren nach Anspruch 7, **dadurch gekennzeichnet, dass** der Schritt der Schätzung der Restdämpfung und der Restphasenverschiebung auf einem rekursiven Identifikationsalgorithmus beruht, zum Beispiel einem Algorithmus der kleinsten Quadrate.

9. Regelverfahren nach einem der Ansprüche 6 bis 8, **dadurch gekennzeichnet, dass** es einen Anfangsschritt der Schätzung der Kreisfrequenz des Sollsignals aufweist.

10. Regelverfahren nach Anspruch 9, **dadurch gekennzeichnet, dass** der Schritt der Schätzung der Kreisfrequenz auf einem rekursiven Identifikationsalgorithmus beruht, zum Beispiel einem Algorithmus der erweiterten kleinsten Quadrate.

11. Regelverfahren nach einem der Ansprüche 6 bis 10, **dadurch gekennzeichnet, dass** es von einem Computerprogramm ausgeführt wird, das eine Folge von Anweisungen aufweist, die geeignet sind, in den Speicher eines Computers geladen zu werden und von dem Prozessor des Computers ausgeführt zu werden, um ein Steuersignal u(t) zur Steuerung des Bewegungssimulators zu erzeugen.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2006161664 A

**Littérature non-brevet citée dans la description**

• **CHAMPENOIS G.** Implementation of RST controllers for a flexible servo considering practical limitations. *Industrial Automation and Control,* 1995, ISSN 0-7803-2081-6, 209-213